Europäisches Patentamt

European Patent Office

Office européen des brevets

(11) Publication number: **0 462 517 A1**

# EUROPEAN PATENT APPLICATION

(21) Application number: **91109762.4**

(22) Date of filing: **14.06.91**

(51) Int. Cl.⁵: **A47C 7/74, B64G 6/00**

(30) Priority: **19.06.90 IT 2069190**

(43) Date of publication of application:
**27.12.91 Bulletin 91/52**

(84) Designated Contracting States:
**AT BE CH DE ES FR GB GR IT LI NL**

(71) Applicant: **F.I.M.A.C. Fabbrica Italiana Macchine Aria Compressa S.p.A.**
**Via Piemonte 19**
**I-20030 Senago (Milano)(IT)**

(72) Inventor: **Callerio, Antonio**
**Via Canova 23**
**IT-20125 Milano(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) **Bioconditioning device for objects with surfaces susceptible of making contact with body parts.**

(57) Bioconditioning device for objects, such as seats, couches, particular items of clothing and the like, with surfaces susceptible of making contact with body parts. The device includes at least one surface layer (2) made of permeable material, susceptible of making contact with a body part, and at least one internal layer (3) in which at least one channel (5) is defined; the inside of the channel is connected to the surface layer and can be connected to a suction device (8). The suction device draws a flow of air from outside through the surface layer (2) to facilitate evaporation and removal of any sweat excreted by the body part which is in contact with the surface layer.

Fig.1

Rank Xerox (UK) Business Services

The present invention relates to a bioconditioning device for objects, such as seats, couches, particular items of clothing and the like, with surfaces susceptible of making contact with body parts.

As is known, the human body has a thermal autoregulation system. In particular, sweating develops in the presence of a high ambient temperature, and by means of said sweating the body conveys to the surface of the skin an aqueous solution which, by evaporating, removes vaporization heat from said surface, thus also cooling the parts underlying the skin and the body itself.

The activity of this phenomenon is proportional to the completeness of the conversion of the water contained in sweat into vapor as said sweat reaches the skin surface, and an even moderate ventilation of said skin is the best way to achieve this conversion, especially when the ambient temperature is close to, or even exceeds, the surface temperature of the human body.

Indeed, one often resorts to the use of fans or ventilators in order to achieve some comfort in high-temperature environments.

Due to clothing and in seated positions, in which extensive regions of the body are in contact with surfaces which are scarcely or not at all permeable, and in the presence of stagnant air, sweat does not evaporate, but the body continues to excrete it, drenching clothing and seats with no benefit.

In order to solve this problem, in closed and/or small environments one resorts to forced ventilation, exposing the uncovered parts of the body, usually the head, the neck and the upper part of the chest, to a strong air current which however, by cooling small body surfaces excessively and too quickly, may have harmful consequences on one's health.

In other cases one resorts to conditioning, modifying the temperature and humidity present in a closed environment so as to create more comfortable conditions.

However, a conditioning system has considerable purchase and operating costs. The environmental conditions preset by adjusting the conditioner may furthermore be not satisfactory for all the people who occupy the conditioned environment, due to different individual characteristics.

Another disadvantage which can be observed in the use of environment conditioning systems is the feeling of discomfort which is unavoidably perceived in passing from a conditioned environment to an unconditioned one.

The aim of the present invention is to solve the above described problems by providing a device which allows the human body to freely perform its thermal regulation function by facilitating the evaporation of sweat in extensive regions of the body where there are large muscular masses which are intensely vascularized and allow the transfer of the cooling action to the other parts of the body.

Within the scope of this aim, an object of the invention is to provide a device which can be applied to, or integrated in, objects such as seats, couches, protective suits, mattresses or others, in those regions susceptible of making contact with body parts, or for those objects which, in their conventional use, may cause discomfort to the user since they prevent the correct evaporation of sweat.

Another object of the invention is to provide a device which can relieve the discomfort of heat without harming one's health.

Still another object of the invention is to provide a device which can be manufactured with modest production costs.

This aim, these objects and others which will become apparent hereinafter are achieved by a bioconditioning device for objects, such as seats, couches, particular items of clothing and the like, with surfaces susceptible of making contact with body parts, characterized in that it comprises at least one surface layer made of permeable material, susceptible of making contact with a body part, and at least one internal layer in which at least one channel is defined, the inside of said channel being connected to said surface layer and being connectable to a suction device to draw a flow of air from the outside through said surface layer to facilitate evaporation and removal of any sweat excreted by said body part in contact with said surface layer.

Further characteristics and advantages of the invention will become apparent from the description of some preferred but not exclusive embodiments of the device according to the invention, illustrated only by way of non-limitative example in the accompanying drawings, wherein:

figure 1 is a view of the device according to the invention, integrated in a seat or couch which is shown in partial cross section;

figure 2 is a perspective view of the device according to the invention in its embodiment as seat cover;

figure 3 is a side view of the device and of the seat illustrated in figure 2;

figure 4 is a partially sectional perspective view of an embodiment of the internal layer of the device according to the invention in its embodiment as seat cover or the like;

figure 5 is a sectional view of the device according to the invention in its embodiment as seat cover or the like;

figure 6 is a perspective view of an element of the seat cover;

figure 7 is a partially sectional perspective view of the device according to the invention in its embodiment as rear seat cover for motor vehicles, for couches or the like;

figure 8 is a view of a protective suit provided, in preset regions, with the device according to the invention;

figure 9 is a sectional view of a portion of the suit in the regions affected by the device according to the invention; and

figure 10 is a sectional perspective view of a portion of the suit in a region affected by the device according to the invention.

In the various illustrated embodiments, the bioconditioning device according to the invention comprises at least one surface layer made of permeable material, preferably a porous fabric, susceptible of making contact with body parts, and at least one internal layer in which channels are defined; said channels are connected to the surface layer and can be connected to a suction device so as to generate a flow of air from the outside through the surface layer.

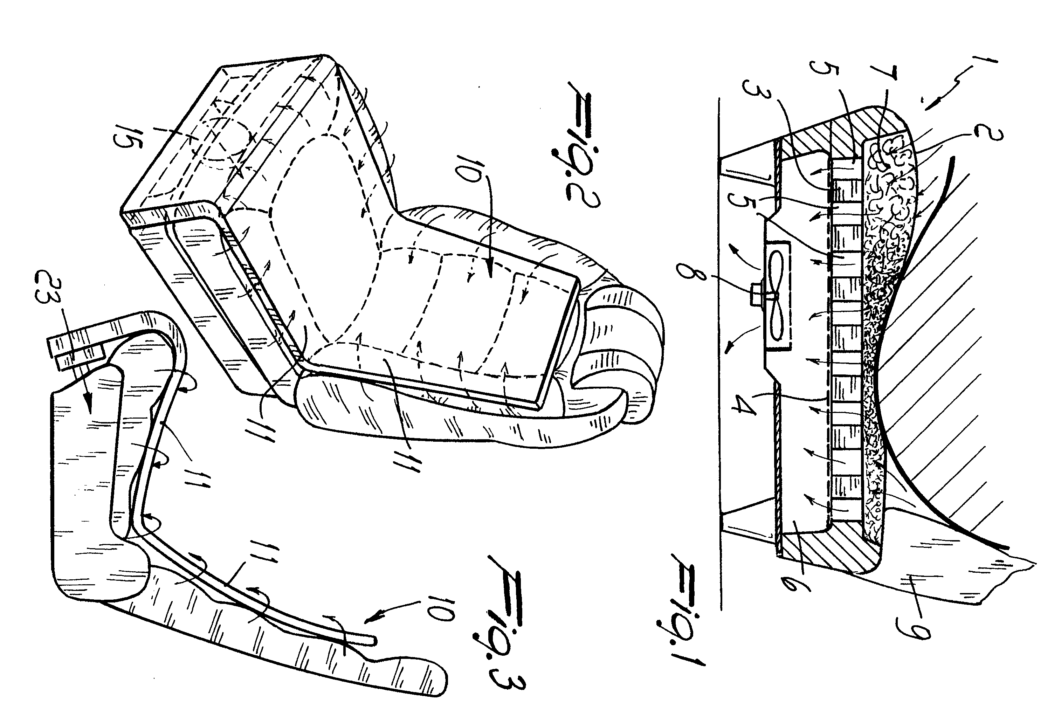

More particularly, figure 1 illustrates a seat or couch 1 in which the bioconditioning device according to the invention is integrated.

The portion of the seat or couch which is intended for sitting has a surface layer 2 made of porous fabric. An internal layer 3 is accommodated in the sitting portion and rests on a supporting structure 4, such as for example a supporting spring mesh or slats of a known type, and has a plurality of channels 5 which are connected above to the surface layer 2 and below to a chamber 6.

An elastic porous layer 7 is interposed between the surface layer 2 and the internal layer 3.

A suction device 8 of a known type, which can be powered electrically, is arranged inside the chamber 6; its suction duct is connected to said chamber 6 and its discharge duct leads outside said chamber, for example under the seat.

Even if it is not of the spring-mesh type, the supporting structure 4 is naturally provided with passages to ensure the connection of the channels 5 to the underlying chamber 6, and the internal layer 3 can be either of the rigid type or be elastically deformable, but with a limited deformability so as not to cause the occlusion of the channels 5 when the seat is used.

If required, the back 9 may also naturally be executed similarly to the above described sitting portion, possibly providing a single suction device which serves both the sitting portion and the back.

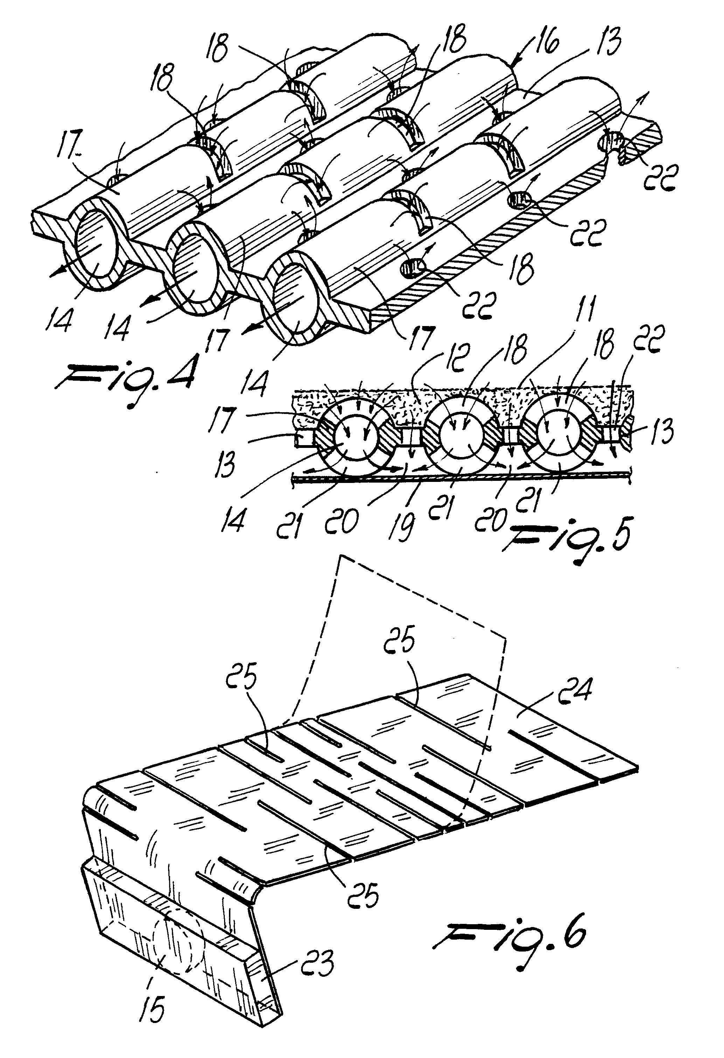

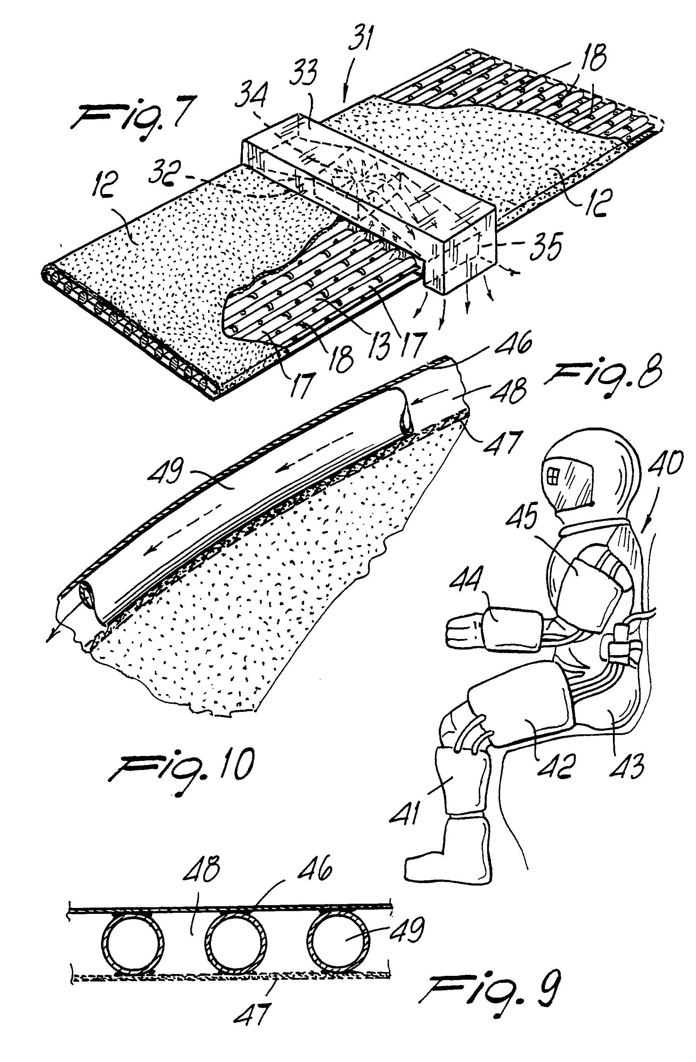

In figures 2 to 7 the bioconditioning device according to the invention is illustrated in its embodiment as seat cover, and more in particular, as seat cover 10 for chairs or front seats of motor vehicles in figures 2 to 6 and as seat cover 31 for rear seats of motor vehicles or couches in figure 7.

The seat cover illustrated in figures 2 to 6 has: a surface layer 11, made for example of porous fabric so as to be permeable to air; an underlying intermediate layer 12 made of elastic porous material; and an internal layer 13 in which a plurality of channels 14, connected to the surface layer 11 and to a suction device 15, is defined.

The internal layer 13 is conveniently constituted by a body 16 with a substantially planar extension, which is formed by a plurality of mutually connected parallel tubular bodies 17 within which the channels 14 are defined.

The body 16 can be produced by extruding flexible elastic synthetic material having sufficient resistance to deformation in order to prevent the occlusion of the channels 14 during use.

The channels 14 are connected to the surface layer 11 by means of a plurality of passages 18 which are defined in the tubular bodies 17 on the side of the body 16 which is directed toward the surface layer 11.

An impermeable layer 19 can be applied on the side of the body 16 which is directed opposite to the surface layer 11. In this case, the compartments 20 which are defined between said layer 19 and the tubular bodies 17 may also be connected to the suction device 15.

In this case it is possible to provide passages 21 in the tubular bodies 17 also on the face of the body 16 which is opposite to the surface layer 11, in order to connect the surface layer 11 with said compartments 20 as well. It is furthermore possible to provide passages 22 also in the portions which mutually join the tubular bodies 17, so as to obtain a greater circulation of air between the surface layer 11 and the channels 14 as well as the compartments 20, as illustrated in particular in figure 5.

A longitudinal end of the tubular bodies 17 and of the compartments 20, if provided, is closed, whereas the opposite end, preferably the end which is intended to be arranged downward, merges into a chamber or manifold 23 in which the suction device 15 is accommodated so that its outlet leads outward.

A supporting plate-like body 24, made of flexible material to adapt to the configuration of the seat to be covered, is applied on the side of the seat cover which is opposite to the surface layer 11.

In order to increase the deformability of the supporting body 24 it is possible to provide longitudinal or transverse cuts 25, as illustrated in particular in figure 6.

The body 24 can conveniently also support the manifold 23 with the suction device 15 proximate to a longitudinal end thereof.

Figure 7 illustrates a seat cover 31 which can be used for back seats of motor vehicles or for couches.

Said seat cover can be manufactured substantially with the same elements already described with reference to the seat cover illustrated in figures 2 to 6, with the difference that the channel 14 and any compartments 20 are closed at the two longitudinal ends, whereas an intermediate portion thereof merges into a chamber or manifold 32 defined in a central arm-rest 33. Said arm-rest 33 also accommodates a suction device 34 and the related discharge duct 35 which leads outward. In practice, the inside of the arm-rest 33 is divided into two chambers, one which acts as manifold and one which acts as discharge duct, and the suction device 34 is arranged between said two chambers.

Advantageously, the intermediate layer indicated in the various embodiments described so far with the reference numerals 7 and 12 may have differentiated densities in the various regions, so as to facilitate suction in preset regions with respect to regions for which said suction is less required.

The concept of the invention can also be applied to protective suits for aerospace use or for other kinds of use, as illustrated in figures 8 to 10.

In this case it is possible to provide portions of the suit 40, indicated by the reference numerals 41 to 45 in figure 8, which are in contact with the main muscle bundles, which are integrated with a bioconditioning device according to the invention.

In this embodiment, the outer layer 46 of said parts is impermeable, whereas the internal layer 47, susceptible of making contact with body parts of the user, is made of permeable material.

An interspace 48 is defined between the outer layer 46 and the internal layer 47 and can be connected to a suction device or to an air conditioning system; after conditioning, the air is reintroduced in the suit.

In the case of aerospace suits, the interspace 48 accommodates, in a known manner, pressurization tubes 49 the inside whereof is sealingly separated from the inside of the interspace 48.

The operation of the bioconditioning device according to the invention, in its various embodiments, is as follows.

The actuation of the suction device causes a low-speed suction of the hot and humid boundary layer which stagnates proximate to the regions of contact between the body and the surface layer of the bioconditioning device. The surface layer, made of porous fabric, allows the ventilation of the neighboring regions and of those which are in contact with the body, and transmits the humidity (sweat) due to capillarity of the fibers from the regions of contact to the neighboring regions, which are affected by the flow of ventilation air.

In this manner an inflow of fresh air, not saturated with humidity and capable of evaporating-drying the sweat, allowing the autoregulation effect of the body, is produced.

In practice it has been observed that the device according to the invention fully achieves the intended aim, since by facilitating the evaporation of sweat in extensive regions of the human body in which there are large and intensely vascularized muscular masses it achieves a cooling action simply by placing said body in the best conditions for performing effective self-cooling.

Furthermore, by not inhibiting sweating, indeed by facilitating it, it aids the elimination of the substances which are expelled by the organism through sweating.

A further advantage is that it allows an optimum diversified cooling effect be for a plurality of people placed in the same environment according to their different physiological characteristics, and that it does not expose the user to sudden temperature differences which could have harmful effects on his health.

Still another advantage is inherent in the low manufacturing and operating costs of the bioconditioning device.

Although the bioconditioning device according to the invention has been described in its application to couches, seats, seat covers and suits, it may also be integrated in other objects for which the problem of removing the sweat of body parts in contact therewith is felt. Thus, for example, it is possible to produce mattress covers, manufactured substantially like the above described seat cover, or mattresses which integrate the bioconditioning device in order to make their use more comfortable in the summer season. Mattress covers or mattresses of this type can furthermore prevent the forming of bedsores in patients in the hospital field.

The bioconditioning device thus conceived is susceptible to numerous modifications and variations, all of which are within the scope of the inventive concept; all the details may furthermore be replaced with technically equivalent elements.

In practice, the materials employed, so long as compatible with the specific use, and the dimensions, may be any according to the requirements and to the state of the art.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

**Claims**

1. Bioconditioning device for objects, such as seats, couches, particular items of clothing and the like, with surfaces susceptible of making contact with body parts,
characterized in that it comprises at least one surface area (2;11;47) made of permeable material, susceptible of making contact with a body part, and at least one channel (5;14;48) which communicates between said at least one surface area and a chamber (6;23;32) which is subjected to a suction means (8;15;34) for drawing air from outside and through said at least one surface area, through said at least one channel, through said chamber, and through an outlet means (35) connected to said chamber, thereby facilitating evaporation and removal of any sweat excreted by the body part in contact with said at least one surface area.

2. Bioconditioning device according to claim 1, characterized in that said at least one surface area is made of porous fabric.

3. Bioconditioning device according to claim 1, characterized in that it further comprises an internal layer (3) arranged between said surface area (2) and said chamber (8), said at least one channel being constituted by a plurality of channels (5) defined in said internal layer, said internal layer (3) being adapted to rest on a supporting structure (4) of a seat or couch and thereby said chamber (6) being defined below said supporting structure.

4. Bioconditioning device according to claim 3, characterized in that it further comprises an elastic porous layer (7) interposed between said surface area (2) and said internal layer (3), said elastic porous layer having a differentiated density along its extension.

5. Bioconditioning device according to claim 1, characterized in that it further comprises an internal layer (13) defining a longitudinal extension and comprising an elastically flexible body (16) through which a plurality of parallel tubular bodies (17) extend, said at least one channel being constituted by a plurality of channels (14) defined in said tubular bodies (17), said channels (14) communicating with said surface area (11) by means of first passages (18) which are defined in said tubular bodies (17) on a side thereof facing said surface area (11).

6. Bioconditioning device according to claim 5, characterized in that said channels (14) are closed at one end thereof, said chamber comprising a manifold (23) arranged in communication with said channels at another end thereof, said suction means (15) being connected to said manifold (23).

7. Bioconditioning device according to claim 6, characterized in that it further comprises a supporting plate-like structure (24) arranged along said longitudinal extension opposite to said surface area, said plate-like structure being made of flexible material and being provided with cuts (25) to increase deformability.

8. Bioconditioning device according to claim 5, characterized in that said channels (14) are closed at both opposite ends thereof, said chamber comprising a manifold (32) arranged in communication with said channels at a middle portion thereof, said suction means (34) being connected between said manifold (32) and said outlet means which comprise a discharge duct (35).

9. Bioconditioning device according to claim 8, characterized in that it further comprises a central arm rest (33) in which said manifold and said discharge duct are arranged.

10. Bioconditioning device according to claims 6 or 8,
characterized in that it further comprises an impermeable layer (19) attached to said tubular bodies (17) on a side opposite to said surface area (11) thereof, longitudinal compartments (20) being defined between said impermeable layer (19) and said tubular bodies (17) which are also in communication with said manifold (23;32), second passages (21) being furthermore provided in said tubular bodies (17) on a side thereof facing said compartments to thereby allow communication between said passages (14) and said compartments (20).

11. Bioconditioning device according to claim 10, characterized in that it further comprises an intermediate layer of elastic porous material (12) interposed between said surface area (11) and said tubular bodies (17), third passages (22) being furthermore provided in portions which mutually join said tubular bodies (17) for direct communication from said surface area (11) to said compartments.

12. Bioconditioning device according to claim 1, characterized in that said surface area comprises an internal layer (47) of portions (41-45) of a protective suit (40) particularly for aerospace use, said device further comprising an outer layer (46) made of impermeable material, said at least one channel comprising an interspace (48) defined between said internal layer (47) and said outer layer (47).

13. Bioconditioning device according to claim 12, characterized in that said interspace is connected to a device for conditioning the air drawn out for reintroducing said air in the suit after conditioning.

14. Bioconditioning device according to claim 12, characterized in that pressurized tubes (49) are accommodated in said interspace and are sealingly separated from said interspace.

Fig.1

Fig.2

Fig.3

Fig.4

Fig.5

Fig.6

Fig.7

Fig.8

Fig.10

Fig.9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,A | FR-A-1 588 656  (VOGEL)<br>* page 4, line 24 - page 5, line 27 *<br>– – – | 1,3 | A 47 C 7/74<br>B 64 G 6/00 |
| A | WO-A-8 901 306  (WYON)<br>* page 4, last paragraph - page 5, paragraph 1; figures *<br>– – – | 1,2,4 | |
| A | DE-A-3 320 771  (NOACK)<br>* page 12, last paragraph - page 13, last paragraph; figures 1-5 *<br>– – – | 5 | |
| A | US-A-3 242 979  (SHLOSINGER)<br>* column 3, line 16 - column 4, line 29; figures *<br>– – – – – | 12,13,14 | |

|  | TECHNICAL FIELDS SEARCHED (Int. Cl.5) |
|---|---|
| | A 47 C<br>B 64 G<br>B 64 D |

The present search report has been drawn up for all claims

| Place of search | Date of completion of search | Examiner |
|---|---|---|
| The Hague | 17 September 91 | VANDEVONDELE J.P.H. |

CATEGORY OF CITED DOCUMENTS

X : particularly relevant if taken alone
Y : particularly relevant if combined with another
   document of the same catagory
A : technological background
O : non-written disclosure
P : intermediate document
T : theory or principle underlying the invention

E : earlier patent document, but published on, or after
   the filing date
D : document cited in the application
L : document cited for other reasons
...........................................................................
& : member of the same patent family, corresponding
   document